# EUROPÄISCHE PATENTSCHRIFT

(11) **EP 1 151 568 B1**
(45) Veröffentlichungstag und Bekanntmachung des Hinweises auf die Patenterteilung: **03.05.2006**
(21) Anmeldenummer: 00909008.5
(22) Anmeldetag: 08.02.2000
(51) Int. Cl.: H04J 14/02

(54) **NETZKNOTEN MIT OPTISCHEN ADD/DROP-MODULEN**
NETWORK NODES WITH OPTICAL ADD/DROP MODULES
NOEUD DE RESEAU COMPRENANT DES MODULES D'INSERTION-EXTRACTION OPTIQUES

(30) Priorität: 18.02.1999 DE 19906862
(43) Veröffentlichungstag der Anmeldung: 07.11.2001
(73) Patentinhaber: SIEMENS AKTIENGESELLSCHAFT, 80333 München (DE)
(72) Erfinder: LEISCHING, Patrick, D-80802 München (DE); STOLL, Detlef, D-81377 München (DE); BOCK, Harald, D-81479 München (DE)
(86) Internationale Anmeldenummer: PCT/DE2000/000371
(87) Internationale Veröffentlichungsnummer: WO 2000/049751

(56) Entgegenhaltungen:
- EP-A- 0 847 158
- EP-A- 0 892 524
- EP-A- 0 907 266
- EP-A- 0 920 153
- AL-SALAMEH D Y ET AL: "OPTICAL NETWORKING" BELL LABS TECHNICAL JOURNAL,US,BELL LABORATORIES, Bd. 3, Nr. 1, 1. Januar 1998 (1998-01-01), Seiten 39-61, XP000750436 ISSN: 1089-7089

## Beschreibung

Die Erfindung betrifft einen Idetzknoten nach den Merkmalen der Oberbegriffe der Ansprüche 1 und 2.

Ein derartiger Netzknoten zur Verwendung in einem Ringnetz ist im Prinzip aus DE 19731494 C4 bekannt.Das zur Datenübertragung im Wellenlängenmultiplexverfahren vorgesehene Ringnetz weist eine Working-Einrichtung, eine Protection-Einrichtung und mehrere Netzknoten mit Add-Drop-Modulen auf. Das Besondere dieses bekannten Ringnetzes, dessen Übertragungskapazität optimal genutzt werden soll, besteht in der Verwendung nur eines einzigen Protection-Kanals, zu dem alle Terminals Zugang haben, d. h. Daten aussenden und Daten empfangen können.

Aus EP 0 847 158 A2 ist ferner ein Netzknoten mit optischen Add-Drop-Modulen für bidirektionale Netze bekannt, bei dem für jede der beiden Übertragungsrichtungen eine separate Baugruppe OADM1 bzw. OADM2 vorgesehen ist, in denen jeweils eine Add- und eine Drop-Funktion für die jeweilige Übertragungsrichtung zusammengefasst sind. Die bekannte Anordnung ist weder für ein Ringnetz vorgesehen, noch enthält sie eine Protection-Einrichtung.

Aus EP 0 892 524 A2 ist weiterhin ein Netzknoten mit optischen Add/Drop-Modulen in einem unidirektionalen Ringnetz mit mehreren Ringleitungen bekannt. Bei einem "single point of failure" im Netzwerk werden die Signale über weitere nicht fehlerhafte Strecken einer andereren Ringleitung umgeleitet.

Schließlich ist es aus EP 0 729 247 A2 bekannt, die Übertragungskapazität bei bidirektionalen Ringnetzen z. B. im Fall einer Störung dadurch zu garantieren, dass auf jedem Glas-Faser-Wellenleiter neben dem Betriebsignal ein Ersatzsignal unterschiedlicher Wellenlänge übertragen wird. Im Störungfall, d. h. bei Unterbrechung der Verbindung zwischen zwei Netzelementen, wird das Betriebsignal zwischen den vom Ausfall der Verbindung betroffenen Netzelementen des Ringnetzes unter Wahrung der vollen Übertragungskapazität auf das Ersatzsignal und damit auf die zweite Wellenlänge umgeschaltet. Als Netzelemente sind Add-Drop-Multiplexer vorgesehen, die parallel zu vorhandenen optischen Schnittstellen an jeweils zusätzlichen optischen Schnittstellen angeordnet sind. Diese zusätzlichen Schnittstellen arbeiten im Gegensatz zu den vorhandenen optischen Schnittstellen in einem anderen Wellenlängenbereich. Betriebsignal und Ersatzsignal eines optischen Senders werden werden am Ausgang jedes Netzelementes in geeigneter Weise über optische Multiplexer zusammengefaßt und über die jeweiligen Glas-Faser-Wellenleiter zum Empfangsort übertragen. Dort trennt ein optischer Demultiplexer die beiden optischen Signale unterschiedlicher Wellenlänge und führt sie den weiteren Verarbeitungsstufen zu.

In rein optischen Wellenlängenmultiplex Netzwerken wird ein Teil der optischen Verbindungen statischen Charakter haben, ein weiterer Teil jedoch kurze Lebensdauern. Zur optimalen Ausnutzung der Netzwerkkapazitäten sind daher Konzepte für automatisch rekonfigurierbare rein optische Add/Drop Multiplexer in der Zukunft erforderlich. Der Umbau bestehender Systeme soll bei laufendem Verkehr stattfinden, d.h., eine sorgfältige Protection das laufenden Verkehrs ohne einen optischen "single point of failure" ist erforderlich.

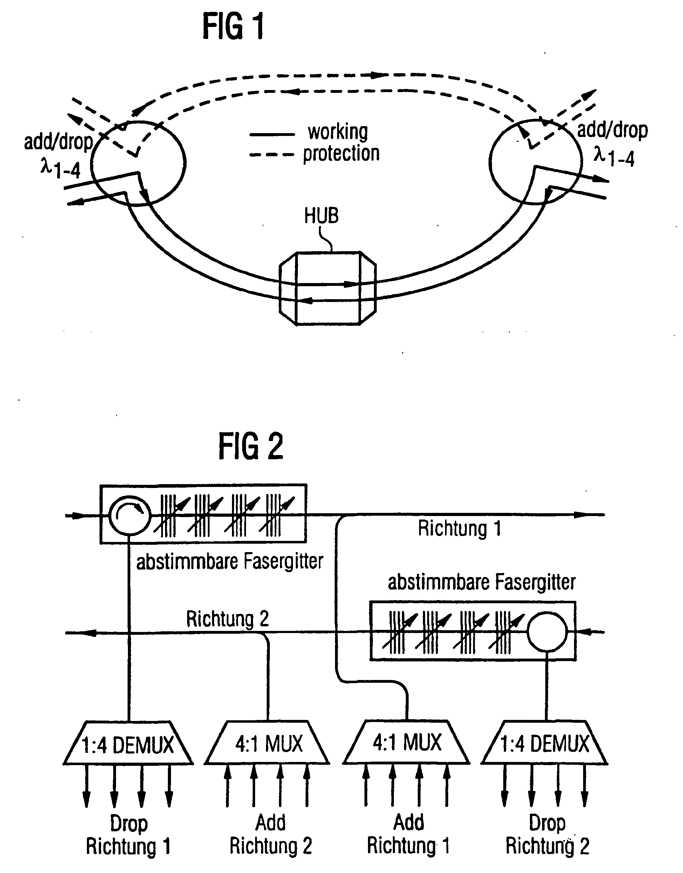

Zusätzlich sollen nicht nur Verkehrsverbindungen über einen zentralen Hub-Netzknoten ermöglicht, sondern beliebige Punkt zu Punkt Verbindungen realisiert werden, siehe Abb. 1. Ein typisches Verkehrsmuster in zukünftigen Zwei-Faser Ring-Netzen wird der Aufbau einer Hin/Rückverbindung in unterschiedlichen Fasern auf der gleichen Strecke sein. Die entsprechende Protection Verbindung führt in zwei Fasern über eine andere Strecke und ermöglicht im Falle eines Faserbruches eine zuverlässige Ersatzverbindung.

Aufgrund der Minimierung der Herstellungskosten in Metropolen Ringnetzen sind hohe Pegelunterschiede in den einzelnen Wellenlängenkanälen zu erwarten.

Die bisher statischen Add/Drop Multiplexer in rein optischen Wellenlängenmultiplex-Ringen sollen zu dynamisch fernkonfigurierbaren Add/Drop Multiplexern erweitert werden. Eine "in service" Erweiterung sollte möglich sein.

Statische optische Add/drop Multiplexer Netzelemente sind erst seit kurzem auf dem Markt (CAMBRIAN, CIENA, OSICOM, LUCENT, SIEMENS 04/99), kommerzielle remote" konfigurierbare Systeme werden für das Jahr 2000 erwartet. Die Fernkonfigurierbarkeit von optischen Add/Drop Multiplexer Modulen ist derzeit nur mit einer kostenaufwendigen optischen Schaltungstechnik (Wellenlängenmultiplexer -demultiplexer, Raumschalt-Matrizen) realisiert worden.

In der Literatur sind keine entsprechenden Anordnungen zum Aufbau fernkonfigurierbarer geschützter 1+1 Verbindungen berichtet, die prinzipielle Verwendung von Fasergittem in Add/Drop Modulen ist im US Patent Nr. 5,748,349 beschrieben.

In der Figur 1 ist ein bidirektionales Ringnetz nach dem Stand der Technik dargestellt.

Die Aufgabe der vorliegenden Erfindung besteht darin, eine gesicherte Übertragung eines WDM-Signals bei Unterbrechung der Leitung sowie bei Austausch von Modulen in einem Ringnetz zu gewährleisten.

Die vorstehend geschilderten Probleme werden durch gemäß Anspruch 1 und Anspruch 2 ausgeführte Netzknoten gelöst. Eine vorteilhafte Weiterbildung der Erfindung ist im Anspruch 3 angegeben.

Mit einem derart aufgebauten Netzknoten ergibt sich der besondere Vorteil, dass bei einem notwendigen Austausch einer der beiden Baugruppen Moduls im Ringnetz die Übertragung eines Signals zwischen zwei beliebigen Netzknoten nicht unterbrochen wird.

Die Schaltungsanordnung des in der Anlage näher erläuterten rein optischen Add/Drop Moduls ermöglicht die modulare Erweiterung von statischen Add/Drop Multiplexem in Wellenlängenmultiplex-Ringen zu dynamisch fernkonfigurierbaren Add/Drop Multiplexem. Dabei wird ein heterodynes Nebensprechen von < 50 dB erreicht.

Im Gegensatz zur herkömmlichen Anordnung der Komponenten in Add/Drop Multiplexem basierend auf Fasergittem, Zirkulatoren und/oder 1:2 Koppler auf einer Karte, werden hier die Funktionen Drop (Zirkulator + Gitter) und Add (1:2 Koppler) auf zwei getrennte Karten verteilt.
Dadurch kann bidirektionaler Zwei-Faser Verkehr ohne jeden optischen "single point of failure" realisiert werden, d.h., es wird eine elektrische und/oder optische 1+1 Protection voll unterstützt (das Modul kann durch externe Versteckerung ebenso für geschützten unidirektionalen Verkehr eingesetzt werden). Durch die verteilte Add-Drop-Funktionalität auf zwei Karten (oder Kartengruppen) ist der Austausch einer Karte (Kartengruppe) nach erfolgter Protection-Schaltung möglich, ohne die Verbinden zu unterbrechen.

Durch die Modularität (z.B. Gruppe mit vier abstimmbaren Gittem) und die Protection Eigenschaftens der Schaltungsanordnung ist eine kontinuierliche Erweiterung vorhandener statischer Add/Drop Multiplexer zur "in service" Umstellung auf dynamische Verkehrsmuster gewährleistet.

Hohe Kanalanzahlen (bis 128) und/oder hohe Unterschiede in den einzelnen Kanalpegeln werden mit diesem Modul unterstützt.

Der wesentliche erfinderische Schritt liegt in der Schaltungsanordnung zum Schutz des optischen Pfades vor einem "single point of failure", d.h., der getrennten Anordnung der Add und Drop Funktionalität auf zwei Karten: zum einen Zirkulator und abstimmbare Gitter für den Drop Prozeß, zum anderen ein 1:2 Koppler zum Einfügen neuer Kanäle.

Ein zusätzlicher dielektrischer Filter (US Patent Nr. 5,748,349) dient zur Aufspaltung der Wellenlängen und zur Erhöhung des heterodynen Nebensprechens auf weniger als 55 dB.

Ausführungsbeispiele der Erfindung werden anhand von Figuren näher erläutert.

Der Aufbau eines fernkonfigurierbaren optischen Add/Drop Multiplexers für bidirektionalen Verkehr (wie Abb. 1) ist in Abb. 2 dargestellt. Ein ausführlicheres Beispiel zeigt Figur 3. Jedes der vier Gitter (Filter) ist in seiner Drop Wellenlänge durch Piezostellelemente abstimmbar (derzeit max. 200 GHz, HIGHWAVE). Dadurch lassen sich mit einem Gitter (Nebensprechen < 30 dB) typischerweise zwei Wellenlangenkanäle flexibel ansteuern. Die Wellenlängenfilter sind typischerweise aus dielektrischen Schichten aufgebaut (Nebensprechen < 25 dB). Der 4:1 Koppler kann durch einen Wellenlängenfilter ersetzt werden.

Um ein Maximum an Flexibilität für zukünftige Entwicklungen zu erreichen, wurde die Add/Drop Funktionalität von der Routing Funktionalität der optischen Cross-Connect Karte (OCC) getrennt, die OCC Karte ist optional.

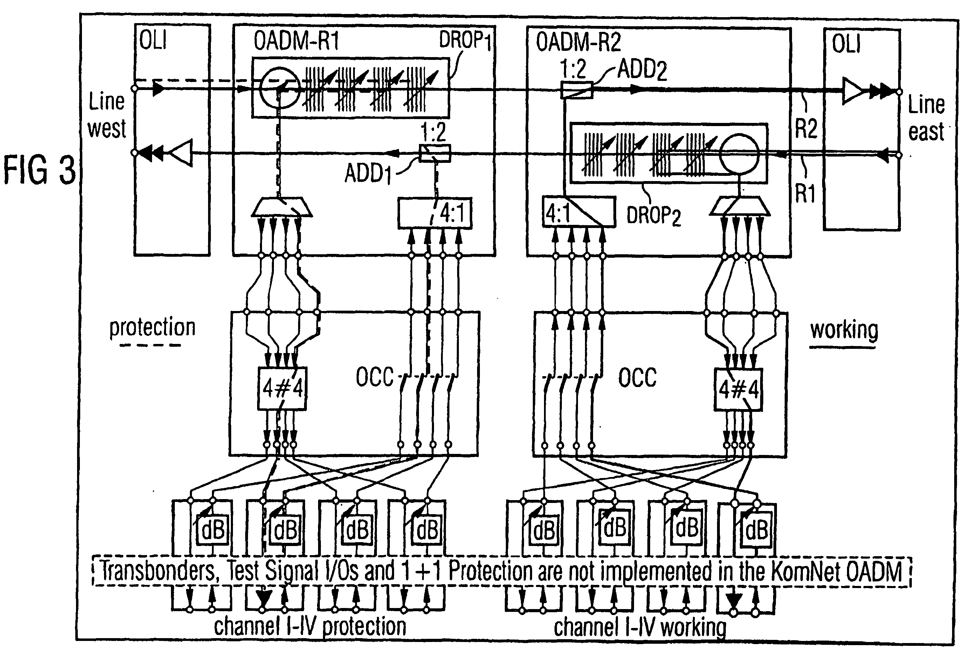

Figur 3: Working und Protection Pfad für rekonfigurierbare OADM-Knoten (optischer Add-Drop-Multiplexer.

Kernpunkte der Erfindung ist die OADM-R Karte:
1. die spezielle Schaltungsanordnung der optischen Komponenten auf den zwei OADMR-Karten und die daraus resultierende logische Trennung der Add/Drop Funktionen.
   Durch die Trennung der Drop Funktion (hier Zirkulator und 4 Gitter) und der Add Funktion (1:2) Koppler auf zwei verschiedene Karten wird bei 1+I Protection jeder "single point of failure" vermieden (bei Verwendung eines zweiten Zirkulators ist diese logische Trennung nicht gegeben).
   Die Kombination von zwei OADM-R-Karten (Karte = Baugruppe; oder statt auf zwei Karten auf zwei Gruppen von Karten) ermöglicht zudem eine Evolution von starren zu dynamisch rekonfigurierbaren Verkehrsbeziehungen: bestehende Systeme verwenden üblicherweise Gruppen von vier Wellenlängen und lassen sich während des laufenden Betriebes um eine "dynamische Gruppe" ergänzen.
2. Zusätzlicher Wellenlängenfilter: Durch den zusätzlichen Wellenlängenfilter wird eine Unterdrückung des heterodynen Nebensprechens von über 55 dB erreicht. Dieser Wert ermöglicht den Einsatz des Modules in Systemen mit 128 Kanälen und/oder mit, hohen Unterschieden in den einzelnen Kanalpegeln.

Der kommerziell erhältliche Add/Drop ermöglicht keine "inservice" Erweiterung und erfordert den Einsatz von Gruppenvorfiltern, um eine kostensenkende Modularität zu erreichen. Um eine geschützte Verbindung zu erreichen, müssen für jede Wellenlänge zwei 2x2 Schalter vorgesehen werden.

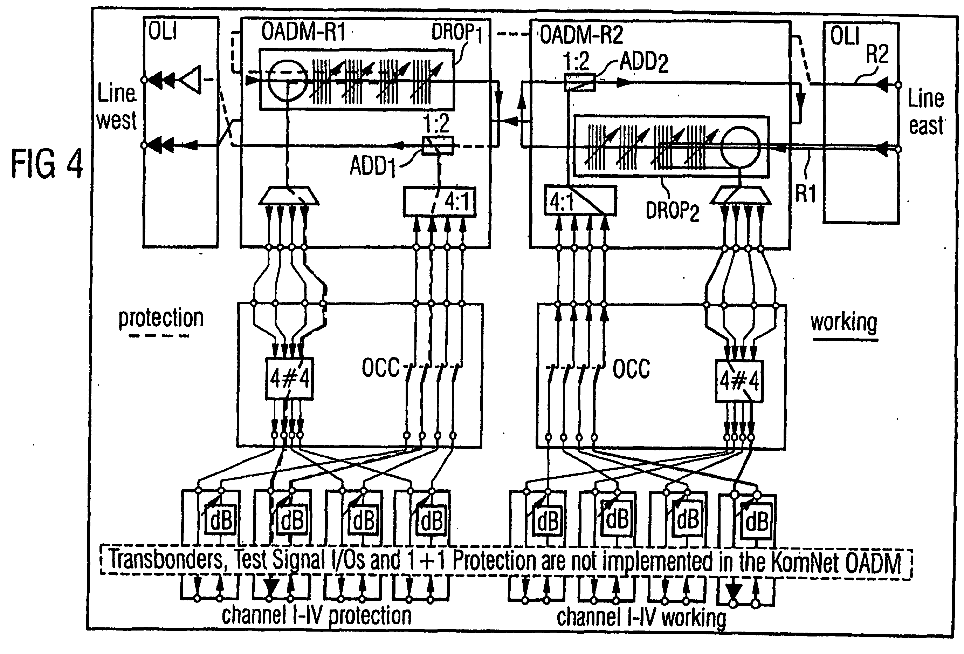

Das OADM-R Modul kann ebenso in unidirektionalen Zwei-Faser-Ringen eingesetzt werden, siehe Abb. 4. Dazu ist keine Änderung der Hardware-Konfiguration nötig, die erforderlichen Veränderungen können durch gesteckte externe Faserverbindungen realisiert werden.

## Patentansprüche

1. Netzknoten mit optischen Add-Modulen (ADDᵢ) und Drop-Modulen (DROPᵢ) (i>1) für ein bidirektionales Ringnetz, der eine Working-Verbindung (line east) und eine Protection-Verbindung (line west) mit jeweils einem ersten und einem zweiten optischen Faserring (R1, R2) zu weiteren Netzknoten aufweist,
**dadurch** gekennzeichet,
dass ein erstes Drop-Modul (DROP₁) und ein erstes Add-Modul (ADD₁) für die bidirektionale Protection-Verbindung (line west) auf einer Protection-Baugruppe/Kartengruppe (OADM-R1) angeordnet sind und
dass ein zweites Drop-Modul (DROP₂) und ein zweites Add-Modul (ADD₂) für die bidirektionale Working-Verbindung (line east) auf einer Working-Baugruppe/Kartengruppe (OADM-R2) angeordnet sind, dass die Module (DROP₁, ADD₁, DROP₂, ADD₂) jeweils einen Leitungs-Eingang und einen Leitungs-Ausgang aufweisen,
dass das zweite Drop-Modul (DROP₂) und das erste Add-Modul (ADD₁) seriell im zweiten Faserring (R2) und das erste Drop-Modul (DROP₁) und das zweite Add-Modul (ADD₂) seriell im ersten Faserring (R1) angeordnet sind.

2. Netzknoten mit optischen Add-Modulen (ADDᵢ) und Drop-Modulen (DROPᵢ) (i>1) für ein unidirektionales Ringnetz mit einem ersten und einem zweiten optischen Faserring (R1, R2), der eine Working-Verbindung und eine Protection-Verbindung zu weiteren Netzknoten aufweist,
**dadurch** gekennzeichet,
daß ein erstes Drop-Modul (DROP₁) und ein erstes Add-Modul (ADD₁) für die unidirektionale Protection-Verbindung auf einer Protection-Baugruppe/Kartengruppe (OADM-R1) sowie
ein zweites Drop-Modul (DROP₂) und ein zweites Add-Modul (ADD₂) für die unidirektionale Working-Verbindung auf einer Working-Baugruppe/Kartengruppe (OADM-R2) angeordnet sind, dass die Module (DROP₁, ADD₁, DROP₂, ADD₂) jeweils einen Leitungs-Eingang und einen Leitungs-Ausgang aufweisen
und derart geschaltet sind, daß das erste Drop-Modul (DROP₁) und das erste Add-Modul (ADD₁) in Serie im zweiten Faserring (R2) sowie das zweite Drop-Modul (DROP₂) und das zweite Add-Modul (ADD₂) in Serie im ersten Faserring (R1) eingeschaltet sind.

3. Netzknoten nach Anspruch 1 oder 2,
**dadurch gekennzeichnet,**
**daß** die Drop-Module (DROP₁, DROP₂) und die Add-Module (ADD₁, ADD₂) der Protection-Baugruppe/Kartengruppe (OADM-R1) und der Working-Baugruppe/Kartengruppe (OADM-R2) jeweils einen Leitungs-Eingang und einen Leitungs-Ausgang aufweisen, so daß bei bidirektionalen Ringnetzen
die Drop-Module (DROP₁) und die Add-Module (ADD₁) der Protection-Baugruppe/Kartengruppe (OADM-R1) bzw. die Drop-Module (DROP₂) und die Add-Module (ADD₂) der Working-Baugruppe/Kartengruppe (OADM-R2) jeweils in unterschiedliche Faserringe (R1, R2) einschaltbar sind
und **daß** bei unidirektionalen Ringnetzen
das erste Drop-Modul (DROP₁) und das erste Add-Modul (ADD₁) der Protection-Baugruppe/Kartengruppe (OADM-R1) bzw. das zweite Drop-Modul (DROP₂) und das zweite Add-Modul (ADD₂) der Working-Baugruppe/Kartengruppe (OADM-R2) jeweils in Serie in einen Faserring (R1, R2) einschaltbar sind.

## Claims

1. Network node with optical add modules (ADDᵢ) and drop modules (DROPᵢ) (i>1) for a bidirectional ring network, which has a working connection (line east) and a protection connection (line west) with in each case a first and a second optical fibre ring (R1, R2) to other network nodes, **characterized in that** a first drop module (DROP₁) and a first add module (ADD₁) for the bidirectional protection connection (line west) are arranged on a protection module/group of boards (OADM-R1) and
**in that** a second drop module (DROP₂) and a second add module (ADD₂) for the bidirectional working connection (line east) are arranged on a working module/group of boards (OADM-R2),
**in that** the modules (DROP₁, ADD₁, DROP₂, ADD₂) in each case have a line input and a line output,
**in that** the second drop module (DROP₂) and the first add module (ADD₁) are arranged serially in the second fibre ring (R2) and the first drop module (DROP₁) and the second add module (ADD₂) are arranged serially in the first fibre ring (R1).

2. Network node with optical add modules (ADDᵢ) and drop modules (DROPᵢ) (i>1) for a unidirectional ring network with a first and a second optical fibre ring (R1, R2), which has a working connection and a protection connection to other network nodes, **characterized in that** a first drop module (DROP₁) and a first add module (ADD₁) for the unidirectional protection connection are arranged on a protection module/group of boards (OADM-R1) and a second drop module (DROP₂) and a second add module (ADD₂) for the unidirectional working connection are arranged on a working module/group of boards (OADM-R2),
**in that** the modules (DROP₁, ADD₁, DROP₂, ADD₂) in each case have a line input and a line output and are connected in such a manner that the first drop module (DROP₁) and the first add module (ADD₁) are inserted in series in the second fibre ring (R2) and the second drop module (DROP₂) and the second add module (ADD₂) are inserted in series in the first fibre ring (R1).

3. Network node according to Claim 1 or 2, **characterized in that** the drop modules (DROP₁, DROP₂) and the add modules (ADD₁, ADD₂) of the protection module/group of boards (OADM-R1) and of the working module/group of boards (OADM-R2) in each case have a line input and a line output so that, in the case of bidirectional ring networks, the drop modules (DROP₁) and the add modules (ADD₁) of the protection module/group of boards (OADM-R1) and, respectively, the drop modules (DROP₂) and the add modules (ADD₂) of the working module/group of boards (OADM-R2) can in each case be inserted into different fibre rings (R1, R2) and that, in the case of unidirectional ring networks, the first drop module (DROP₁) and the first add module (ADD₁) of the protection module/group of boards (OADM-R1) and the second drop module (DROP₂) and the second add module (ADD₂) of the working module/group of boards (OADM-R2) can in each case be inserted in series into a fibre ring (R1, R2).

## Revendications

1. Noeud de réseau comprenant des modules d'insertion (ADDᵢ) et des modules d'extraction (DROPᵢ) optiques (i > 1) pour un réseau en anneau bidirectionnel, lequel comporte une connexion de travail (line east) et une connexion de protection (line west) avec à chaque fois un premier et un deuxième anneaux à fibres optiques (R1, R2) vers d'autres noeuds de réseau,
**caractérisé en ce que**
un premier module d'extraction (DROP₁) et un premier module d'insertion (ADD₁) pour la connexion de protection bidirectionnelle (line west) sont disposés sur un sous-ensemble de protection / groupe de cartes (OADM-R1) et
un deuxième module d'extraction (DROP₂) et un deuxième module d'insertion (ADD₂) pour la connexion de travail bidirectionnelle (line east) sont disposés sur un sous-ensemble de travail / groupe de cartes (OADM-R2),
les modules (DROP₁, ADD₁, DROP₂, ADD₂) comportent respectivement une entrée de ligne et une sortie de ligne,
le deuxième module d'extraction (DROP₂) et le premier module d'insertion (ADD₁) sont disposés en série dans le deuxième anneau à fibres (R2) et le premier module d'extraction (DROP₁) et le deuxième module d'insertion (ADD₂) sont disposés en série dans le premier anneau à fibres (R1).

2. Noeud de réseau comportant des modules d'insertion (ADD₁) et des modules d'extraction (DROPᵢ) optiques (i > 1) pour un réseau en anneau unidirectionnel comprenant un premier et un deuxième anneaux à fibres optiques (R1, R2) qui comporte une connexion de travail et une connexion de protection vers d'autres noeuds de réseau,
**caractérisé en ce que**
un premier module d'extraction (DROP₁) et un premier module d'insertion (ADD₁) pour la connexion de protection unidirectionnelle sont disposés sur un sous-ensemble de protection / groupe de cartes (OADM-R1) et
un deuxième module d'extraction (DROP₂) et un deuxième module d'insertion (ADD₂) pour la connexion de travail unidirectionnelle sont disposés sur un sous-ensemble de travail / groupe de cartes (OADM-R2),
les modules (DROP₁, ADD₁, DROP₂, ADD₂) comportent respectivement une entrée de ligne et une sortie de ligne et sont montés de manière telle que le premier module d'extraction (DROP₁) et le premier module d'insertion (ADD₁) sont intercalés en série dans le deuxième anneau à fibres (R2) et le deuxième module d'extraction (DROP₂) et le deuxième module d'insertion (ADD₂) sont intercalés en série dans le premier anneau à fibres (R1).

3. Noeud de réseau selon la revendication 1 ou 2,
**caractérisé en ce que**
les modules d'extraction (DROP₁, DROP₂) et les modules d'insertion (ADD₁, ADD₂) du sous-ensemble de protection /groupe de cartes (OADM-R1) et du sous-ensemble de travail /groupe de cartes (OADM-R2) comportent respectivement une entrée de ligne et une sortie de ligne de sorte que
dans le cas de réseaux en anneau bidirectionnels, les modules d'extraction (DROP₁) et les modules d'insertion (ADD₁) du sous-ensemble de protection / groupe de cartes (OADM-R1) resp. les modules d'extraction (DROP₂) et les modules d'insertion (ADD₂) du sous-ensemble de travail / groupe de cartes (OADM-R2) peuvent être intercalés respectivement dans différents anneaux à fibres (R1, R2) et
dans le cas de réseaux en anneau unidirectionnels, le premier module d'extraction (DROP₁) et le premier module d'insertion (ADD₁) du sous-ensemble de protection / groupe de cartes (OADM-R1) resp. le deuxième module d'extraction (DROP₂) et le deuxième module d'insertion (ADD₂) du sous-ensemble de travail / groupe de cartes (OADM-R2) peuvent être intercalés respectivement en série dans un anneau à fibres (R1, R2).
